(19) Europäisches Patentamt
European Patent Office
Office européen des brevets

(11) **EP 1 954 537 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: **06819566.8**

(22) Anmeldetag: **16.11.2006**

(51) Int Cl.:
*B62D 6/00* (2006.01)     *B62D 13/00* (2006.01)
*B62D 15/02* (2006.01)     *B60T 8/1755* (2006.01)
*B60T 8/17* (2006.01)

(86) Internationale Anmeldenummer:
**PCT/EP2006/068591**

(87) Internationale Veröffentlichungsnummer:
**WO 2007/060135 (31.05.2007 Gazette 2007/22)**

(54) **VERFAHREN UND FAHRDYNAMIKREGELSYSTEM ZUM STABILISIEREN EINES FAHRZEUGGESPANNS**

METHOD AND VEHICLE DYNAMICS CONTROL SYSTEM FOR STABILIZING A VEHICLE COMBINATION

PROCEDE ET SYSTEME DE REGULATION DYNAMIQUE DU ROULAGE EN VUE DE LA STABILISATION D'UN ATTELAGE

(84) Benannte Vertragsstaaten:
**DE FR**

(30) Priorität: **22.11.2005 DE 102005055904**
**24.10.2006 DE 102006050716**

(43) Veröffentlichungstag der Anmeldung:
**13.08.2008 Patentblatt 2008/33**

(73) Patentinhaber: **Continental Teves AG & Co. oHG**
**60488 Frankfurt (DE)**

(72) Erfinder:
• **WALDBAUER, Dirk**
**65817 Eppstein (DE)**
• **BAUER, Urs**
**71640 Ludwigsburg (DE)**
• **ROGOWSKI, Lothar**
**61389 Schmitten (DE)**
• **PREUSSER, Tobias**
**63075 Offenbach (DE)**

(56) Entgegenhaltungen:
WO-A-2004/041612     DE-A1- 10 225 120
DE-A1- 10 326 190     DE-A1-102004 005 074
DE-C1- 3 831 492

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 954 537 B1

**Beschreibung**

**Technisches Gebiet**

Die Erfindung betrifft ein Verfahren zum Stabilisieren eines aus einem Zugfahrzeug und einem Anhänger oder Auflieger bestehenden Fahrzeuggespanns. Die Erfindung betrifft ferner ein Fahrdynamikregelsystem zum Stabilisieren eines aus einem Zugfahrzeug und einem Anhänger oder Auflieger bestehenden Fahrzeuggespanns, das zur Durchführung des Verfahrens geeignet ist.

**Hintergrund und Stand der Technik**

Fahrzeuggespanne, die aus einem Zugfahrzeug und einem Anhänger oder Auflieger bestehen, haben ab einer bestimmten Grenzgeschwindigkeit ein instabiles Fahrverhalten. Oberhalb der Grenzgeschwindigkeit treten Schlingerbewegungen des Anhängers oder Aufliegers auf, deren Amplituden ansteigen. Besonders bei Autobahnfahrten erreichen Fahrzeuggespanne oftmals die Grenzgeschwindigkeit, so dass Schlingerbewegungen des Anhängers hervorgerufen werden, die zu teils schweren Unfällen führen. Grund hierfür ist, dass durchschnittlich geübte Fahrzeugführer ein schlingerndes Gespann in der Regel nicht hinreichend stabilisieren können, da zur Stabilisierung ausgeführte Lenkbewegungen aufgrund der Reaktionszeit  nicht in der erforderlichen Phasenbeziehung zu den Schlingerbewegungen stehen, so dass diese unter Umständen sogar verstärkt werden.

Zur Stabilisierung von Fahrzeuggespannen sind Fahrdynamikregelsysteme bekannt, die Gierschwingungen des Gespanns robust erkennen und das Gespann durch fahrerunabhängige Bremseingriffe stabilisieren. Hierbei wird die Geschwindigkeit des Fahrzeuggespanns unter die Grenzgeschwindigkeit verringert. Ferner ist es bekannt, anhand von automatischen Lenkeingriffen, bei denen mittels eines Lenkungsaktuators fahrerunabhängig ein Lenkwinkel an den lenkbaren Rädern des Zugfahrzeugs eingestellt wird, oder anhand von Bremseingriffen ein Giermoment zu erzeugen, das die Gierschwingungen bedämpft. Das Giermoment wird insbesondere aus einer Regelabweichung zwischen einer erfassten Istgierrate und einer Referenzgierrate ermittelt, die üblicherweise anhand eines Fahrzeugmodells insbesondere aus einem den Fahrerrichtungswunsch repräsentierenden Lenkwinkelsignal berechnet wird. Derartige Fahrdynamikregelsysteme sind z.B. aus den WO 2004 041612 A und DE 10 2004 005074 A1 bekannt.

Hierbei stellt sich jedoch das Problem, dass das in die Berechnung der Referenzgierrate eingehende Lenkwinkelsignal Signalschwingungen aufweisen kann, die auf die Schlingerbewegungen des Anhängers zurückführbar sind. Die Signalschwingungen können insbesondere durch Lenkbewegungen verursacht werden, die von dem Fahrer oder dem Lenkungsaktuator zur Kompensation der Gierschwingungen des Gespanns ausgeführt werden. Dies kann zu Beeinträchtigungen der Fahrdynamikregelung und insbesondere zu fehlerhaften Eingriffen des Regelungssystems führen.

**Darstellung der Erfindung**

Daher ist es eine Aufgabe der vorliegenden Erfindung, eine zuverlässigere Fahrdynamikregelung zur Stabilisierung von Fahrzeuggespannen mit einem Zugfahrzeug und einem Anhänger oder Auflieger bereitzustellen.

Erfindungsgemäß wird diese Aufgabe durch ein Verfahren mit den Merkmalen des Patentanspruchs 1 und durch eine Vorrichtung mit den Merkmalen des Patentanspruchs 16 gelöst.

Demgemäß ist es vorgesehen, dass ein Verfahren der eingangs genannten Art mit den folgenden Schritten durchgeführt wird:

- Erfassen eines Eingangssignals, das Signalschwingungen, die auf eine Schlingerbewegung des Anhängers oder Aufliegers zurückzuführen sind, wobei die Signalschwingungen einen Basisanteil des Eingangssignals überlagern,

- Berechnen eines Referenzsignals aus dem Eingangssignal, wobei die Berechnung derart vorgenommen wird, dass das Referenzsignal näherungsweise einem aus dem Basisanteil des Eingangssignals ermittelten Referenzsignal entspricht,

- Ermitteln einer Stellgröße in Abhängigkeit von einer Regelabweichung zwischen dem Referenzsignal und einem erfassten Istsignal und

- Beeinflussen des Fahrzustands des Zugfahrzeugs nach Maßgabe der ermittelten Stellgröße.

Ferner wird ein Fahrdynamikregelsystem zum Stabilisieren eines aus einem Zugfahrzeug und einem Anhänger oder einem Auflieger bestehenden Fahrzeuggespanns bereitgestellt. Das Fahrdynamikregelsystem umfasst:

- einen Sensor, mit dem ein Eingangssignal erfassbar ist, das Signalschwingungen aufweist, die auf eine Schlingerbewegung des Anhängers oder Aufliegers zurückzuführen sind, wobei die Signalschwingungen einen Basisanteil des Eingangssignals überlagern,

- eine Berechnungseinrichtung, die zur Berechnung eines Referenzsignals aus dem Eingangssignal ausgebildet ist, wobei die Berechnung derart erfolgt, dass das Referenzsignal näherungsweise einem aus dem Basisanteil des Eingangssignals ermittelten Referenzsignal entspricht,

- eine Regeleinrichtung, in der eine Stellgröße in Abhängigkeit von einer Regelabweichung zwischen dem Referenzsignal und einem erfassten Istsignal ermittelbar ist und

- einen Aktuator, mit dem ein Fahrzustand des Zugfahrzeugs nach Maßgabe der ermittelten Stellgröße beeinflussbar ist.

Vorteilhaft geht die Erfindung davon aus, dass das Eingangssignal einen Schwingungsanteil aufweist, der auf Schlingerbewegungen des Anhängers oder Aufliegers zurückzuführen ist, und ferner einen Basisanteil enthält, der mit dem eigentlichen Kurs des Fahrzeugs verknüpft ist. Anhand dieses Eingangssignals wird die Berechnung des Referenzsignals  dann so vorgenommen, das dieses näherungsweise einem aus dem Basisanteil des Eingangssignals ermittelten Referenzsignal entspricht. Hierdurch wird ein Referenzsignal erhalten, das den gewünschten eigentlichen Kurs des Fahrzeugs widerspiegelt. Auf der Grundlage dieses Referenzsignals kann dann zuverlässig eine Fahrdynamikregelung vorgenommen werden.

Unter den Signalschwingungen sind im Rahmen der Erfindung Schwingungsanteile des Eingangssignals zu verstehen, die unmittelbar oder mittelbar auf die Schlingerbewegungen des Abhängers oder Aufliegers zurückführbar sind. So beispielsweise beeinflussen die Schlingerbewegungen des Anhängers die Gierrate des Fahrzeugs als mögliches Eingangssignal unmittelbar. Eine mittelbare Beeinflussung erfolgt beispielsweise im Hinblick auf den Lenkwinkel, wenn der Lenkbewegungen zum Kompensieren der Gierschwingungen des Fahrzeuggespanns ausgeführt werden. Der von den Schwingungen überlagerte Basisanteil ist der übrige Anteil des Eingangssignal, der insbesondere den Kurs des Fahrzeugs bzw. den von dem Fahrer gewünschten Kurs widerspiegelt. Dieser Anteil kann auch den Wert 0 haben, wenn das Fahrzeug beispielsweise geradeaus fährt.

In einer Ausführungsform des Verfahrens und des Fahrdynamikregelsystems ist es vorgesehen, dass aus dem Eingangssignal in einem Korrektionsschritt ein Zwischensignal berechnet wird, das näherungsweise dem Basisanteil des Eingangssignals entspricht, und dass das Zwischensignal für die Bestimmung des Referenzsignals herangezogen wird.

Da das Zwischensignal zumindest näherungsweise dem Basisanteil des Eingangssignals entspricht, kann das Referenzsignal in dieser Ausführungsform aus einem modifizierten Eingangssignal bestimmt werden. D.h., bei der Berechnung des Referenzsignals ist gegenüber der herkömmlichen Berechnung lediglich ein zusätzlicher Signalverarbeitungsschritt notwendig, in dem das Zwischensignal ermittelt wird.

Eine Ausgestaltung des Verfahrens und des Fahrdynamikregelsystems sieht vor, dass es sich bei dem Referenzsignal um ein Referenzgierratensignal und bei dem Istsignal um ein mittels eines Gierratensensor erfasstes Istgierratensignal handelt.

Vorteilhaft wird bei dieser Ausgestaltung eine Referenzgierrate berechnet, auf deren Grundlage die Stabilisierung des Fahrzeuggespanns erfolgt.

Eine Ausgestaltung des Verfahrens und des Fahrdynamikregelsystems beinhaltet weiterhin, dass das Referenzsignal anhand eines Fahrzeugmodells in Abhängigkeit von dem Zwischensignal berechnet wird.

Bei einer Ausführungsform des Verfahrens und des Fahrdynamikregelsystems ist es vorgesehen, dass es sich bei dem Eingangssignal um ein mittels eines Lenkwinkelsensors erfasstes Lenkwinkelsignal handelt.

Damit kann ein Referenzgierratensignal bei der Erfindung in gewohnter Weise aus dem Lenkwinkelsignal ermittelt werden, das einen Schwingungsanteil aufweist, der insbesondere auf Lenkbewegungen zur Kompensation der Gierschwingungen des  Gespanns zurückzuführen ist. Hierbei wird der das Lenkwinkelsignal um diesen Schwingungsanteil bereinigt.

Eine weitere Ausgestaltung des Verfahrens und des Fahrdynamikregelsystems ist dadurch gekennzeichnet, dass das Eingangssignal dem Istsignal und das Zwischensignal dem Referenzsignal entspricht.

Insbesondere kann das Referenzgierratensignal bei dieser Ausgestaltung in dem zuvor genannten Korrektionsschritt direkt aus dem erfassten Gierratensignal ermittelt werden, ohne dass eine Modellrechnung erfolgt.

Die Ausgestaltung hat insbesondere den Vorteil, dass die Regelabweichung zwischen dem Referenzsignal und dem Istsignal genau dem auf die Schlingerbewegungen des Anhängers oder Aufliegers zurückführbaren Schwingungsanteil des Eingangssignals entspricht.

Eine Weiterbildung des Verfahrens und des Fahrdynamikregelsystems zeichnet sich dadurch aus, dass in dem Korrektionsschritt Mittelwerte aufeinanderfolgender Extremwerte des Eingangssignals gebildet werden, und dass das Zwischensignal nach Maßgabe der Mittelwerte bestimmt wird.

Der auf den Kurswunsch zurückführbare Basisanteil des Referenzsignals wird bei dieser Weiterbildung vorteilhaft anhand von Mittelwerten aufeinanderfolgender Extrema des Eingangssignals bestimmt. Durch diese Mittelwertbildung werden die Signalschwingungen aus dem Eingangssignal herausgerechnet.

Allerdings vergeht zwischen dem Auftreten von zwei aufeinanderfolgenden Extrema des Eingangssignals in der Regel eine gewisse Zeitspanne.

Daher sieht eine Ausführungsform des Verfahrens und des Fahrdynamikregelsystems vor, dass das Zwischensignal oder das Referenzsignal in einem Zeitpunkt anhand eines Extrapolationsverfahrens aus vor dem Zeitpunkt gebildeten Mittelwerten bestimmt wird.

Hierdurch kann das von den Signalschwingungen bereinigte Zwischensignal auch zwischen dem Auftreten von zwei Extrema des Eingangssignals realistisch bestimmt werden. Insbesondere können zwischen dem Auftreten von zwei Extrema stattfindende Signaländerungen auf diese Weise berücksichtigt werden.

Weiterhin beinhaltet eines Ausgestaltung des Verfahrens und des Fahrdynamikregelsystems, dass die Mittelwerte bei dem Extrapolationsverfahren mit einem Gewichtungsfaktor versehen werden, der für weiter zurückliegend gebildete Mittelwerte geringer ist, als für näher zurückliegend bestimmte Mittelwerte.

Hierdurch kann die Extrapolationsgüte weiter verbessert werden.

Ferner ist eine Weiterbildung des Verfahrens und des Fahrdynamikregelsystems dadurch gekennzeichnet, dass das Zwischensignal mittels eines modellbasierten Filters aus den Mittelwerten bestimmt wird.

Das modellbasierte Filter erlaubt dabei aufgrund seiner umfangreichen Parametrierbarkeit in der Regel eine besonders flexible Einstellung, in welchem Maße das Zwischensignal an das Eingangssignal angenähert werden soll.

Eine Ausgestaltung des Verfahrens und der Vorrichtung zeichnet sich dadurch aus, dass das Eingangssignal als Steuerungsgröße und das Zwischensignal als Modellausgangsgröße innerhalb des dem Filter zugrunde liegenden Modells berücksichtigt wird.

Unter der Modellausgangsgröße wird dabei die Ausgangsgröße des dem Filter zugrunde liegenden Modells verstanden, bei der es sich in der Regel um eine Zustandsgröße des modellierten Systems handelt. Als Steuerungsgröße wird hier insbesondere die Größe verstanden, die den Steuereingang des Modells darstellt.

Bei einer Ausführungsform des Verfahrens und der Vorrichtung ist es vorgesehen, dass es sich bei dem Filter um ein Kalman-Filter handelt.

Ferner sieht eine Ausführungsform des Verfahrens und der Vorrichtung vor, dass es sich bei der Stellgröße um ein Lenkmoment handelt, mit dem eine von dem Fahrer bedienbare Lenkhandhabe beaufschlagt wird, um den Fahrzustand des Fahrzeugs zu beeinflussen. Eine weitere Ausführungsform des Verfahrens und der Vorrichtung sieht vor, dass es sich bei der Stellgröße um ein Zusatzlenkwinkel handelt, mit dem eine Lenkung (Überlagerungslenkung, elektrohydraulische oder elektrische Lenkung) steuerbar ist, um den Fahrzustand des Fahrzeugs zu beeinflussen.

Die Erfindung ermöglicht insbesondere bei dieser Ausführungsform eine stabile Regelung. Hier kann nämlich das Problem auftreten, dass aufgrund des Lenkmoments, mit dem die Lenkhandhabe beaufschlagt wird, ein Lenkwinkel zur Kompensation der Gespannschwingungen eingestellt wird, der erfasst und zur Bildung der Referenzgierrate herangezogen wird. Hierdurch würde die in der Regeleinrichtung ermittelte Stellgröße selbst zur Bestimmung der Referenzgröße herangezogen, was in der Regel zu einer instabilen Regelung führt. Da die Referenzgierrate bei der Erfindung jedoch so berechnet wird, dass sie den Schwingungsanteil, der aufgrund des die Gespannschwingungen kompensierenden Schwingungsanteils des Lenkwinkels entsteht, nicht enthält, treten derartige Instabilitäten bei der Erfindung nicht auf.

Darüber hinaus wird ein Computerprogrammprodukt bereitgestellt, das einen Algorithmus definiert, der ein Verfahren der zuvor dargestellten Art umfasst.

Diese und andere Vorteile, Besonderheiten und zweckmäßige Ausgestaltungen der Erfindung werden auch anhand der Ausführungsbeispiele deutlich und im Hinblick auf die Ausführungsbeispiele nachfolgend unter Bezugnahme auf die Figuren beschrieben.

**Kurze Beschreibung der Figuren**

Von den Figuren zeigt:

Fig. 1    ein Blockdiagramm eines Regelungssystems in einer ersten Ausführungsform,

Fig. 2    ein Blockdiagramm einer Berechnungseinheit des Regelungssystems in einer ersten Ausführungsform,

Fig. 3    ein Diagramm mit einer Darstellung des Verlaufs einer Gierrate während eines Fahrmanövers eines Zugfahrzeugs mit und ohne schlingernden Anhänger,

Fig. 4    ein Blockdiagramm der Berechnungseinheit des Regelungssystems in einer zweiten Ausführungsform,

Fig. 5    ein Diagramm, in dem die Ermittlung eines von Schwingungen bereinigten Signals aus einem schwingenden

EP 1 954 537 B1

Signal veranschaulicht ist.

**Darstellung von Ausführungsbeispielen**

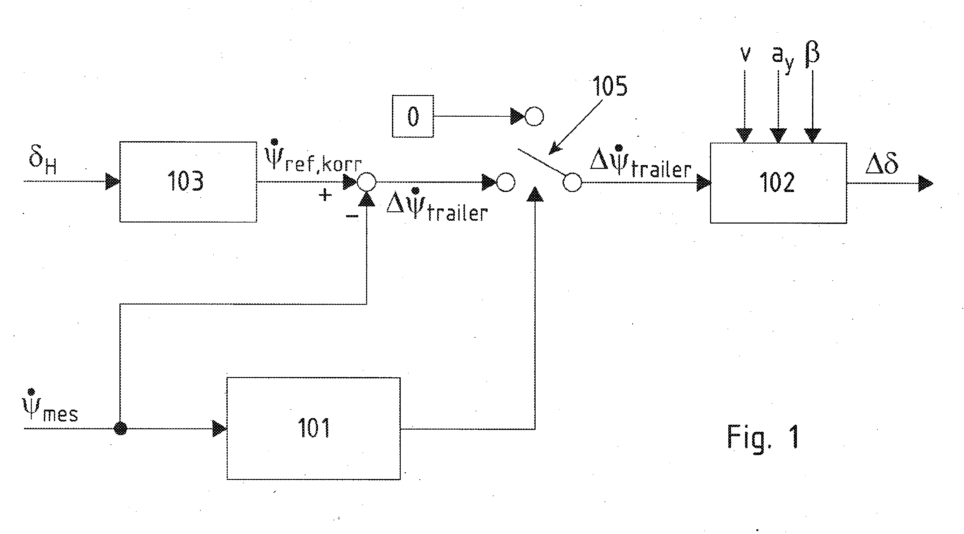

In Figur 1 ist ein schematisches Blockdiagramm eines Regelungssystem zur Stabilisierung eines Fahrzeuggespanns in einer ersten Ausführungsform gezeigt. Das Fahrzeuggespann umfasst beispielsweise ein zweiachsiges, vierrädriges Zugfahrzeug mit lenkbaren Vorderrädern sowie einen an das Zugfahrzeug gekoppelten Anhänger. Das Regelungssystem enthält eine Aktivierungseinrichtung 101, in der in einer dem Fachmann grundsätzlich bekannten Weise Schlingerbewegungen des Anhängers erkannt werden. Die Schlingerbewegungen des Anhängers führen zu harmonischen Signalschwingungen des Istgierratensignals $\dot{\psi}_{mes}$ und eines Querbeschleunigungssignals. Die Frequenzen dieser Signalschwingungen liegen typischerweise zwischen ungefähr 0,5 Hz und 1,5 Hz. Zur Erkennung von Schlingerbewegungen können daher harmonische Schwingungen mit derartigen Frequenzen in den erfassten Signalen identifiziert werden, wobei in Figur 1 beispielhaft nur die Auswertung des Istgierratensignals $\dot{\psi}_{mes}$ dargestellt ist. Die Erfassung dieses Signals erfolgt mittels eines in der Figur nicht dargestellten Gierratensensors. Das Querbeschleunigungssignal, das zusätzlich oder alternativ berücksichtigt werden kann, kann mittels eines in der Figur ebenfalls nicht darstellten Querbeschleunigungssensors erfasst werden.

Wird in der Aktivierungseinrichtung 101 eine Schlingerbewegung des Anhängers festgestellt, so wird eine Regeleinrichtung 102 aktiviert, in der aus einer Regelabweichung $\Delta\dot{\psi}_{Trailer}$ zwischen einem Referenzgierratensignal $\dot{\psi}_{ref,korr}$ und dem Istgierratensignal $\dot{\psi}_{mes}$ eine Stellgröße berechnet wird, nach deren Maßgabe das Fahrverhalten des Zugfahrzeugs bzw. des Gespanns mittels eines Aktuators beeinflussbar ist. Der Aktivierungsmechanismus ist in Figur 1 schematisch anhand des Schalters 105 dargestellt. Die Regeleinrichtung 102 enthält in der dargestellten Ausführungsform einen adaptiven Proportional-Differenzial-Regler (PD-Regler), dessen Reglerparameter insbesondere an die beispielsweise aus den Signalen von Raddrehzahlsensoren ermittelbare Fahrzeuggeschwindigkeit v, die mittels des Querbeschleunigungssensors erfasste Querbeschleunigung $a_y$ sowie einen anhand von gemessenen Größen ermittelten Schätzwert für den Schwimmwinkel $\beta$ des Zugfahrzeugs adaptierbar sind. Bei der beispielhaft dargestellten Ausgestaltung des Regelungssystems handelt es sich bei der Reglerausgangsgröße um einen Zusatzlenkwinkel $\Delta\delta$, dessen Einstellung an den lenkbaren Rädern des Zugfahrzeugs zu einer Stabilisierung des Gespanns bzw. dem Aufbau eines die Gierschwingungen kompensierenden Giermoments führt.

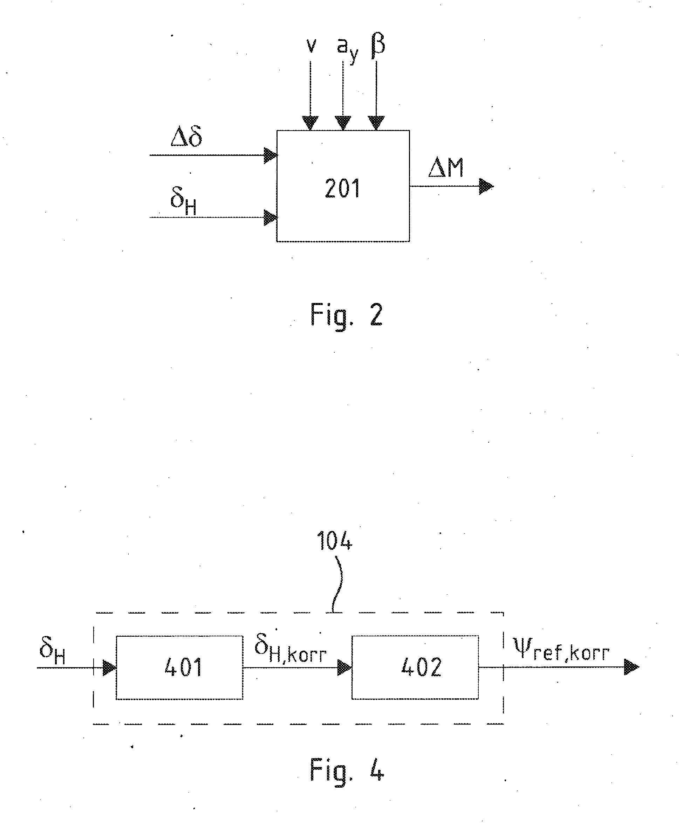

Der Zusatzlenkwinkel $\Delta\delta$ wird in einer Ausführungsform mittels eines Lenkungsaktuators, an den lenkbaren Rädern des Fahrzeugs eingestellt. Dabei wird der von dem Fahrer eingestellte Lenkwinkel mit dem Zusatzlenkwinkel überlagert, so dass sich an den lenkbaren Rädern ein Lenkwinkel ergibt, welcher der Summe aus dem Fahrerlenkwinkel und dem Zusatzlenkwinkel ergibt. Als Aktuator kann in dieser Ausführungsform beispielsweise eine sogenannte Überlagerungslenkung eingesetzt werden. In einer weiteren Ausführungsform der Erfindung wird mittels eines Aktuators ein Lenkmoment in den Lenkstrang des Zugfahrzeugs eingesteuert, mit dem insbesondere die von dem Fahrer bediente Lenkhandhabe beaufschlagt wird. Anhand dieses Lenkmoments erhält der Fahrer des Zugfahrzeugs eine Empfehlung zur Ausführung von stabilisierenden Lenkbewegungen. Wie in Figur 2 dargestellt, wird das Lenkmoment $\Delta M$ in einer Momentenberechnungseinrichtung 201 aus dem Zusatzlenkwinkel $\Delta\delta$ ermittelt. Neben dem Zusatzlenkwinkel $\Delta\delta$ wird bei der Ermittlung des Lenkmoments $\Delta M$ vorzugsweise auch der an den lenkbaren Rädern eingestellte Lenkwinkel $\delta_H$ berücksichtigt. Ferner erfolgt die Ermittlung in Abhängigkeit von der Fahrzeuggeschwindigkeit v, der Querbeschleunigung $a_y$ und dem Schwimmwinkel $\beta$. Die Einbeziehung des Schwimmwinkels ist denkbar, aber nicht notwendig. Der Aktuator zur Einsteuerung des Lenkmoments $\Delta M$ in den Lenkstrang ist beispielsweise als elektronische Servolenkung ausgebildet, die eine Schnittstelle zur externen Ansteuerung mittels der Regeleinrichtung 102 aufweist.

In noch weiteren Ausführungsformen können auch Bremseneingriffe zur Stabilisierung des Gespanns mittels eines Bremsenaktuators vorgenommen werden. In diesem Fall handelt es sich bei der Reglerausgangsgröße vorzugsweise um ein Giermoment, das zur Berechnung von radindividuellen Bremskräften herangezogen wird, die dann mittels des Bremsenaktuators eingestellt werden.

Die Referenzgierrate $\dot{\psi}_{ref,korr}$ wird bei der in Figur 1 dargestellten Ausführungsform des Regelungssystems innerhalb der Berechnungseinrichtung 103 anhand eines Fahrzeugmodells insbesondere aus dem Lenkwinkelsignal $\delta_H$ ermittelt. Dieses gibt den Lenkwinkel an, der an den lenkbaren Rädern des Zugfahrzeugs bzw. an einem Lenkrad von dem Fahrer eingestellt worden ist, und wird mittels eines Lenkwinkelsensors erfasst. Ferner können weitere Eingangsgrößen, wie beispielsweise die Fahrzeuggeschwindigkeit v, zur Berechnung der Referenzgierrate $\dot{\psi}_{ref,korr}$ herangezogen werden. Als Fahrzeugmodell kann ein dem Fachmann grundsätzlich bekanntes Modell, wie beispielsweise ein lineares Einspurmodell des Zugfahrzeugs, verwendet werden.

Schwingungen des Fahrzeuggespanns, die aus Schlingerbewegungen des Anhängers resultieren, spiegeln sich in der Regel auch in dem Lenkwinkelsignal $\delta_H$ wider. Insbesondere ist dies der Fall, wenn zur Stabilisierung des Gespanns ein Lenkmoment in den Lenkstrang des Zugfahrzeuges eingeprägt wird. Dieses Lenkmoment weist zur Bedämpfung der Schwingungen ebenfalls einen periodisch schwingenden Verlauf auf, der im Wesentlichen gegenphasig zu den Gierschwingungen des Gespanns ist. Dabei ist die Phasenbeziehung der Lenkmoment-Anhängerschwingung

5

aktuatorabhängig (Trägheiten in der Lenkung). Wichtig ist der Phasenverlauf zum resultierenden Lenkwinkel am Rad. Dieser ist dann in der Tat näherungsweise gegenphasig zur Schwingung. Da aufgrund des Lenkmoments Lenkbewegungen durchgeführt werden, weist das Lenkwinkelsignal $\delta_H$ gleichfalls Schwingungen auf. Würde unter Zugrundelegung dieses Lenkwinkelsignals ein Referenzgierratensignal anhand eines Fahrzeugmodells berechnet, so würden sich diese Schwingungen ebenfalls in dem Referenzgierratensignal wiederfinden, das damit nicht als Referensignal für eine Regelung einsetzbar bzw. auf Grund der Rückkopplung der Stellgröße auf das Referenzsignal zu einer instabilen Regelung führen würde.

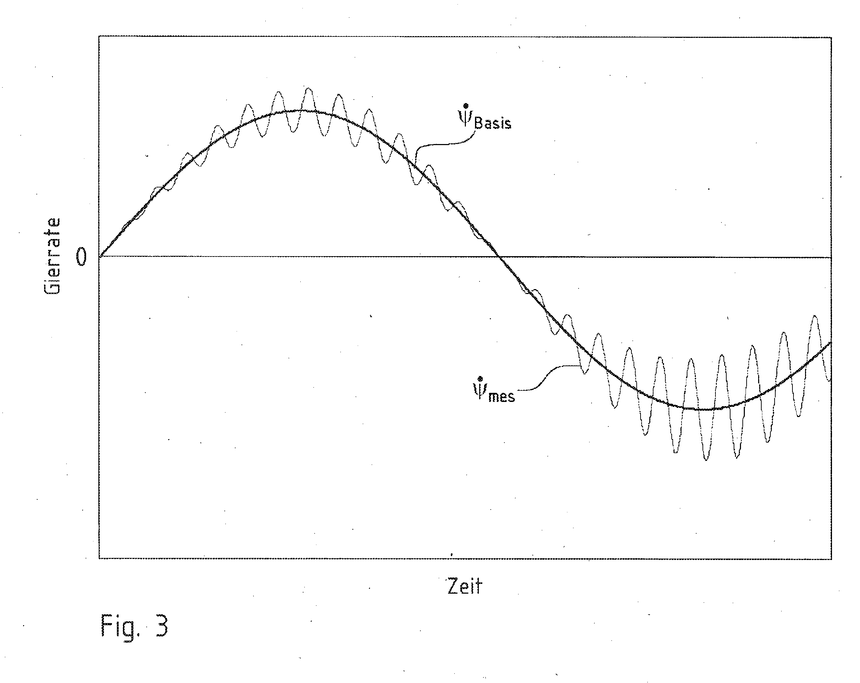

Die Erfindung geht davon aus, dass die von den Gespannschwingungen beeinflussten Fahrzeuggrößen einen Schwingungsanteil aufweisen, der auf Gespannschwingungen zurückzuführen ist. Dieser Schwingungsteil überlagert einen Basisanteil, der lediglich durch den eigentlichen Kurs des Fahrzeugs bzw. von dem durch den Fahrer gewünschten Kurs des Fahrzeugs beeinflusst ist. Zur Veranschaulichung ist in Figur 3 beispielhaft der zeitliche Verlauf der gemessenen Gierrate $\dot{\psi}_{mes}$ eines Zugfahrzeugs dargestellt, in dem die durch die Gespannschwingungen verursachten Schwingungen zu erkennen sind. Das Istgierratensignal $\dot{\psi}_{mes}$ ergibt sich dabei aus einer Überlagerung zwischen einem durch die Gespannschwingungen bestimmten Schwingungsanteil und einem Basisanteil, der den Kurs des Fahrzeugs widerspiegelt. Dieser Anteil ist anhand der Kurve $\dot{\psi}_{Basis}$ in Figur 3 veranschaulicht. Insbesondere bei der Ausführungsform der Erfindung, bei der ein Lenkmoment in den Lenkstrang eingesteuert wird, hat das gemessene Lenkwinkelsignal grundsätzlich einen ähnlichen schwingenden Verlauf wie das Istgierratensignal $\dot{\psi}_{mes}$, bei dem ein Schwingungsanteil einen Basisanteil überlagert, der dem Kurswunsch des Fahrers entspricht.

In der Berechnungseinrichtung 103 wird daher ein Referenzgierratensignal $\dot{\psi}_{ref,korr}$ ermittelt, das dem entsprechenden Basisanteil einer Referenzgierrate entspricht. In Figur 4 ist eine Ausführungsform der Berechnungseinrichtung 103 anhand eines schematischen Blockdiagramms dargestellt. Das Lenkwinkelsignal $\delta_H$ wird bei dieser Ausführungsform einem Block 401 zugeführt. In dem Block 401 wird aus dem Lenkwinkelsignal in einer noch zu beschreibenden Weise ein Zwischensignal $\delta_{H,korr}$ berechnet, das die Schwingungsanteile des Lenkwinkelsignals $\delta_H$ nicht aufweist, und näherungsweise dem Basisanteil des Lenkwinkelsignals $\delta_H$ entspricht, das den Richtungswunsch des Fahrers repräsentiert. Das Zwischensignal $\delta_{H,korr}$ wird dann in dem Block 402 zur Berechnung des Referenzgierratensignals $\psi_{ref,korr}$ anhand des Fahrzeugmodells herangezogen.

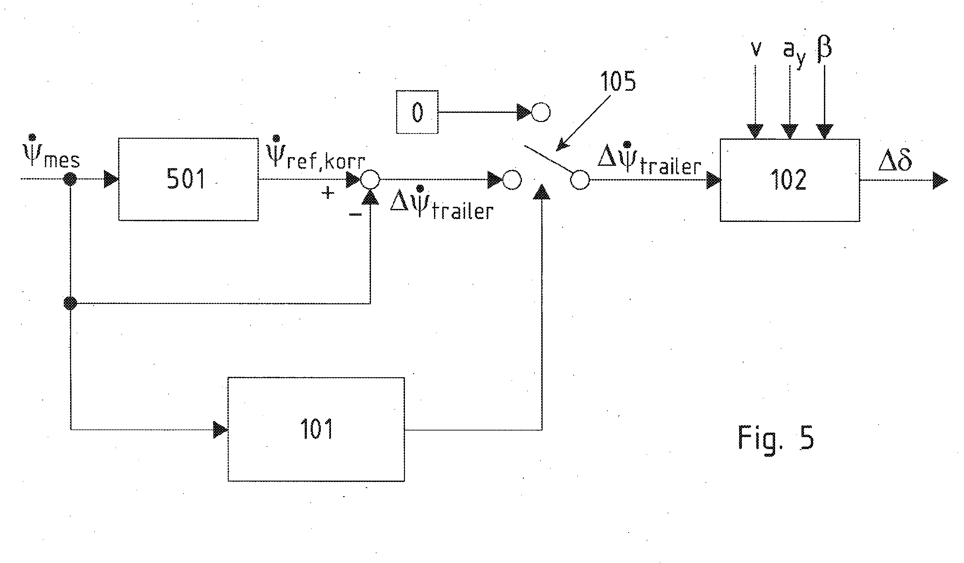

In Figur 5 ist eine weitere Ausführungsform des Regelungssystems dargestellt, bei der das Referenzgierratensignal $\dot{\psi}_{ref,korr}$ in einer Berechnungseinrichtung 501 aus dem gemessenen Istgierratensignal $\dot{\psi}_{mes}$ berechnet wird. In einer noch zu beschreibenden Weise wird dabei in der Berechnungseinrichtung 501 aus dem Schwingungsanteile aufweisenden Istgierratensignal $\dot{\psi}_{mes}$ das Referenzgierratensignal $\dot{\psi}_{ref,korr}$ berechnet, das die Schwingungsanteile nicht enthält und somit dem Basisanteil des Istgierratensignals $\dot{\psi}_{mes}$ entspricht. Im Übrigen entspricht das Regelungssystem dem in Figur 1 dargestellten System. Das Referenzgierratensignal entspricht in dieser Ausführungsform somit dem Basisanteil des Istgierratensignals $\dot{\psi}_{mes}$. Dabei wird davon ausgegangen, dass sich das Fahrzeuggespann bis auf die auftretenden Gierschwingungen stabil bewegt. Der Vorteil dieser Ausführungsform liegt darin begründet, dass die Regelabweichung $\Delta\dot{\psi}_{trailer}$ genau die Gierschwingungen des Gespanns wiedergibt.

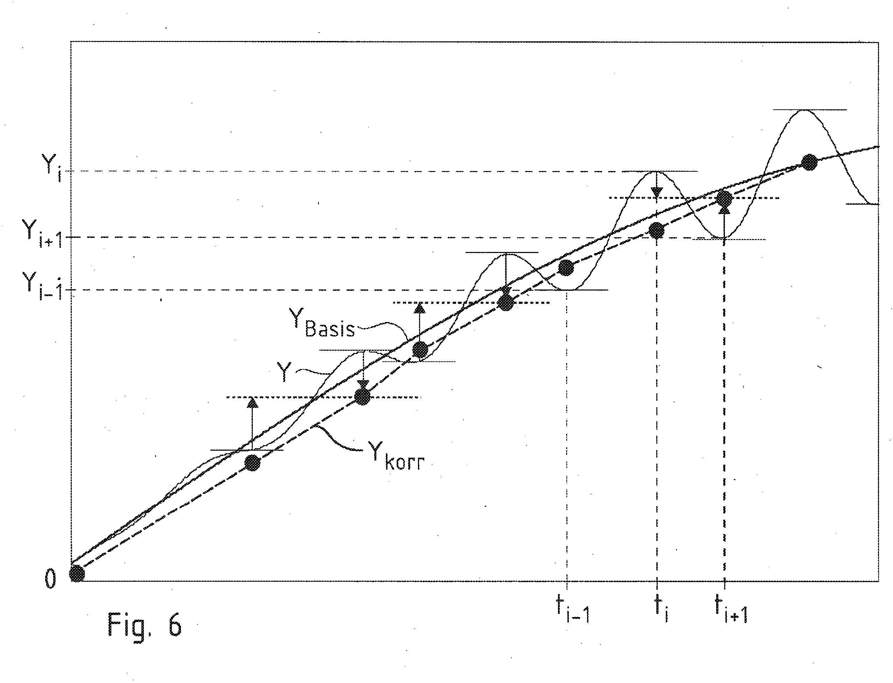

Anhand von Figur 6 wird im Folgenden ein bevorzugtes Berechnungsverfahren beschrieben, mit dem überlagernde Signalschwingungen aus dem Lenkwinkelsignal $\delta_H$ oder dem Istgierratensignal $\dot{\psi}_{mes}$ herausgerechnet werden können und das entsprechende Basissignal geschätzt werden kann. In Figur 5 ist dazu beispielhaft ein erstes, einen Schwingungsanteil aufweisendes Signal $Y$ dargestellt, bei dem es sich etwa um das Lenkwinkelsignal $\delta_H$ oder das Istgierratensignal $\dot{\psi}_{mes}$ handeln kann. Die Schwingungen des Signals $Y$ überlagern ein Basissignal $Y_{Basis}$, das ebenfalls in Figur 6 dargestellt ist. Zur näherungsweisen Berechnung des Basissignals $Y_{Basis}$ durch das korrigierte Signal $Y_{korr}$ werden jeweils aufeinanderfolgende lokale Extrema des Signals erfasst, wobei in der Figur beispielhaft insbesondere der lokale Minimalwert $Y_{i-1}$ in dem Zeitpunkt $t_{i-1}$ und der folgende lokale Maximalwert $Y_i$ in dem Zeitpunkt $t_i$ eingezeichnet sind. Für ein Paar mit zwei aufeinanderfolgenden lokalen Extremwerten des Signals wird dann ein Mittelwert gebildet, wobei in der Figur beispielhaft insbesondere der Mittelwert

$$\overline{Y}_{i-1,i} = \frac{Y_{i-1} + Y_i}{2} \tag{1}$$

des lokalen Minimalwerts $Y_{i-1}$ und des lokalen Maximalwerts $Y_i$ eingezeichnet ist. Der Mittelwert stellt dabei einen Wert des korrigierten Signals $Y_{korr}$ dar. In der beispielhaft dargestellten Ausgestaltung wird der Mittelwert als Wert des Signals $Y_{korr}$ in dem Zeitpunkt des Auftretens des zweiten lokalen Extremums eines Paares aufeinanderfolgender Extrema gesetzt, so dass für das Signal $Y_{korr}$ insbesondere in dem Zeitpunkt $t_i$ der Signalwert $\overline{Y}_{i-1,i}$ gesetzt wird. Grundsätzlich kann der Mittelwert jedoch als Signalwert in einem beliebigen Zeitpunkt zwischen dem Auftreten von zwei aufeinanderfolgenden lokalen Extrema gesetzt werden.

Das zweite lokale Extremum eines Paares stellt weiterhin das erste lokale Extremum eines nachfolgenden Paares lokaler Extremwerte dar, aus dem dann in der zuvor beschriebenen Weise wiederum ein Signalwert für das zu

berechnende Signal $Y_{korr}$ bestimmt wird. D.h. beispielsweise, dass der lokale Maximalwert $Y_i$ in dem Zeitpunkt $t_i$ das erste lokale Extremum eines Paares bildet, das zudem den Minimalwert $Y_{i+1}$ im Zeitpunkt $t_{i+1}$ umfasst. Der Mittelwert

$$\overline{Y}_{i,i+1} = \frac{Y_i + Y_{i+1}}{2} \qquad\qquad (2)$$

stellt somit einen weiteren Signalwert des korrigierten Signals $Y_{korr}$ dar, der bei der dargestellten Ausführungsform für den Zeitpunkt $t_{i+1}$ gesetzt wird. Somit werden aus Paaren aufeinanderfolgender Extrema des Signals $Y$ fortlaufend Stützpunkte

$$\left\{.., \left(t_i, \overline{Y}_{i-1,i}\right), \left(t_{i+1}, \overline{Y}_{i,i+1}\right), ...\right\}$$

für das Signal $Y_{korr}$ berechnet.

Nach der Berechnung eines Stützpunktes und bis zur Berechnung des nächsten Stützpunktes wird das Signal $Y_{korr}$ vorzugsweise anhand der zuvor bereits ermittelten Stützpunkte extrapoliert. Hierbei werden Parameter einer Funktion, wie beispielsweise eines Polynoms einer bestimmten Ordnung, anhand der zuvor ermittelten Stützpunkte bestimmt. Der Signalwert in einem Zeitpunkt nach der Berechnung des vorhergehenden Stützpunktes ergibt sich dann als Funktionswert der ermittelten Funktion. Bei der Bestimmung der Parameter wird zudem vorzugsweise ein Gewichtungsfaktor eingesetzt, der weiter zurückliegenden Stützpunkten ein geringeres Gewicht gibt als näher zurückliegenden. Durch einen derartigen Gewichtungsfaktor, der oft auch als "Vergessensfaktor" bezeichnet wird, werden weiter zurückliegende Stützpunkte bei der Extrapolation weniger stark berücksichtigt. Gleichzeitig erfolgt eine stärkere Berücksichtigung des ursprünglichen Signals $Y$.

In einer weiteren Ausführungsform, die sich insbesondere zur direkten Bestimmung des Referenzgierratensignals $\dot{\psi}_{ref,korr}$ aus dem Istgierratensignal $\dot{\psi}_{mes}$ eignet, erfolgt die Berechnung des korrigierten Signals mittels eines Kalman-Filters auf der Grundlage eines Einspurmodells des Fahrzeugs, das durch ein PDT$_2$- oder PT$_2$-Übertragungsverhalten charakterisiert ist. Bekanntermaßen umfasst der Kalman-Filter-Algorithmus in jedem Berechnungszyklus im Allgemeinen einen Prädiktionsschritt und einen Korrekturschritt. Im Zyklus $k$ wird innerhalb des Prädiktionsschritts eine Schätzung $\hat{x}_k^-$ eines Zustands aus der im vorausgegangenen Zyklus $k$-1 ermittelten Zustandsschätzung $\hat{x}_{k-1}$ sowie dem Wert eines Steuereingang $u_k$ im Zeitpunkt k berechnet:

$$\hat{x}_k^- = A\hat{x}_{k-1} + Bu_k \qquad\qquad (3)$$

Mit A ist hier die Systemmatrix bezeichnet, die das Übertragungsverhalten des Systems wiedergibt. Im Rahmen der Erfindung wird beispielsweise ein Einspurmodell des Fahrzeugs mit einem PDT$_2$-Übertragungsverhalten oder ein Modell mit einem PT$_2$-Verhalten angenommen. Das Übertragungsverhalten legt die Struktur der Matrix A fest. Die konkreten Werte von in der Matrix enthaltenden Parametern müssen an das jeweilige Fahrzeug angepasst werden, was etwa im Rahmen von Fahrversuchen vorgenommen werden kann. Dem zu schätzenden Systemzustand entspricht im Rahmen der Erfindung das korrigierte Signal $Y_{korr}$. Bei der Zustandsgleichung handelt es sich aufgrund des Übertragungsverhaltens um eine Differenzengleichung zweiter Ordnung für die eindimensionale Zustandsgröße, die nach einem dem Fachmann grundsätzlich bekannten Verfahren in ein Gleichungssystem erster Ordnung überführt wird. Der Zustandsvektor enthält dabei neben dem Signalwert $Y_{korr}(k)$ im Zeitpunkt k auch den Signalwert im Zeitpunkt $k$-1. Die Zustandsvektoren in Gleichung (3) sind daher zweidimensional; bei der Matrix A handelt es sich um eine 2x2-Matrix. Als Steuereingang $u_k$ wird das gemessene Signal $Y$ verwendet. Neben der Schätzung des Systemzustands wird in dem Prädiktionsschritt ferner eine Vorhersage $P_k^-$ für den Schätzfehler aus dem Schätzfehler $P_{k-1}$ des vorausgegangenen Zyklus anhand der Gleichung

$$P_k^- = AP_{k-1}A^T + Q \qquad\qquad (4)$$

ermittelt, wobei die Matrix $Q$ das Systemrauschen beschreibt und in geeigneter Weise gewählt wird.

Im Korrekturschritt des Kalman-Filter-Algorithmus wird zunächst die so genannte Kalmanverstärkung $K_k$ anhand von

$$K_k = P_k^- H^T \left( HP_k^- H^T + R \right)^{-1} \qquad (5)$$

berechnet, wobei die Matrix H den Zusammenhang zwischen den Messgrößen und den betrachteten Zustandsgrößen und die Matrix $R$ das Messrauschen angibt. Als Messgrößen werden hier die in der zuvor beschriebenen Weise bestimmten Mittelwerte der Extrema des Signals $Y$ verwendet, so dass die Matrix $H$ dem Einheitselement entspricht. Die Matrix $R$ wird in geeigneter Weise gewählt.

Weiterhin wird im Korrekturschritt der aktuelle Schätzwert $\hat{x}_k$ des Zustands anhand der Gleichung

$$\hat{x}_k = \hat{x}_k^- + K_k \left( y_k - H\hat{x}_k^- \right) \qquad (6)$$

berechnet, wobei die Messgröße $y_k$ dem im Zyklus $k$ bestimmten Mittelwert entspricht. Zudem wird in dem Korrekturschritt die im Prädiktionsschritt des nachfolgenden Zyklus zu verwendende Fehler-Kovarianzmatrix $P_k$ durch

$$P_k = \left( 1 - K_k H \right) P_k^- \qquad (7)$$

berechnet.

Mittels des dargestellten Kalman-Filters kann somit näherungsweise eine von den Signalschwingungen des Eingangssignals $Y$ bereinigtes Basissignal $Y_{korr}$ bestimmt werden. Das Kalman-Filter hat gegenüber einer Extrapolation den Vorteil, dass anhand einer entsprechenden Wahl des Messrauschens (Matrix $R$) und des Systemrauschens (Matrix $Q$) besonders flexibel eingestellt werden kann, in welchem Maße das Signal $Y_{korr}$ dem gemessenen Signal $Y$ angeglichen werden soll. Zusätzlich kann im Kalman-Filter eine zeitliche Gewichtung der Mittelwerte in Form eines Vergessensfaktors vorgesehen werden. Das Kalman-Filter eignet sich wie bereits erwähnt insbesondere dazu, das Referenzgierratensignal $Y_{korr} = \dot{\psi}_{ref,korr}$ direkt aus dem Istgierrensignal $Y = \dot{\psi}_{mes}$ zu bestimmen.

Die Erfindung stellt ein Regelungssystem bereit, mit dem ein Fahrzeuggespann bei Schlingerbewegungen des Anhängers oder Aufliegers durch Eingriffe in das Lenksystem oder durch radindividuelle Bremseingriffe stabilisiert werden kann. Da die Gespannschwingungen oberhalb einer bestimmten Grenzgeschwindigkeit auftreten, ist es überdies in einer Ausführungsform vorgesehen, dass die Geschwindigkeit des Gespanns bei auftretenden Gespannschwingungen durch Bremseneingriffe unter die Grenzgeschwindigkeit gesenkt wird, um eine nachhaltige Stabilisierung zu erreichen. Derartige Bremseneingriffe können insbesondere dann vorgenommen werden, wenn trotz stabilisierender Eingriffe in das Lenksystem weiterhin Gierschwingungen des Gespanns festgestellt werden.

**Patentansprüche**

1. Verfahren zum Stabilisieren eines aus einem Zugfahrzeug und einem Anhänger oder einem Auflieger bestehenden Fahrzeuggespanns mit den folgenden Schritten:

   - Erfassen eines Eingangssignals ($Y$; $\delta_H$; $\dot{\psi}_{mes}$), das Signalschwingungen aufweist, die auf eine Schlingerbewegung des Anhängers oder Aufliegers zurückzuführen sind, wobei die Signalschwingungen einen Basisanteil ($Y_{Basis}$; $\dot{\psi}_{Basis}$) des Eingangssignals ($Y$; $\delta_H$; $\dot{\psi}_{mes}$) überlagern,
   - Berechnen eines Referenzsignals ($\dot{\psi}_{ref,korr}$) aus dem Eingangssignal ($Y$; $\delta_H$; $\dot{\psi}_{mes}$), wobei die Berechnung derart vorgenommen wird, dass das Referenzsignal ($\dot{\psi}_{ref,korr}$) näherungsweise einem aus dem Basisanteil ($Y_{Basis}$; $\dot{\psi}_{Basis}$) des Eingangssignals ($Y$; $\delta_H$; $\dot{\psi}_{mes}$) ermittelten Referenzsignal entspricht,
   - Ermitteln einer Stellgröße ($\Delta\delta$; $\Delta M$) in Abhängigkeit von einer Regelabweichung ($\Delta\dot{\psi}_{Trailer}$) zwischen dem Referenzsignal ($\dot{\psi}_{ref,korr}$) und einem erfassten Istsignal ($\dot{\psi}_{mes}$) und
   - Beeinflussen des Fahrzustands des Zugfahrzeugs nach Maßgabe der ermittelten Stellgröße ($\Delta\delta$; $\Delta M$).

2. Verfahren nach Anspruch 1,

**dadurch gekennzeichnet,**
**dass** aus dem Eingangssignal ($Y$ ; $\delta_H$; $\dot{\psi}_{mes}$) in einem Korrektionsschritt ein Zwischensignal ($\delta_{H,korr}$ ; $\dot{\psi}_{ref,korr}$) berechnet wird, das näherungsweise dem Basisanteil ($Y_{Basis}$ ; $\dot{\psi}_{Basis}$) des Eingangssignals ($Y$ ; $\delta_H$ ; $\dot{\psi}_{mes}$) entspricht, und dass das Zwischensignal für die Bestimmung des Referenzsignals ($\dot{\psi}_{ref,korr}$) herangezogen wird.

3.  Verfahren nach Anspruch 1 oder 2,
    **dadurch gekennzeichnet,**
    **dass** es sich bei dem Referenzsignal um ein Referenzgierratensignal ($\dot{\psi}_{ref,korr}$) und bei dem Istsignal um ein mittels eines Gierratensensors erfasstes Istgierratensignal ($\dot{\psi}_{mes}$) handelt.

4.  Verfahren nach einem der vorangegangenen Ansprüche,
    **dadurch gekennzeichnet,**
    **dass** das Referenzsignal ($\dot{\psi}_{ref,korr}$) anhand eines Fahrzeugmodells in Abhängigkeit von dem Zwischensignal ($\delta_{H,korr}$), berechnet wird.

5.  Verfahren nach einem der vorangegangenen Ansprüche,
    **dadurch gekennzeichnet,**
    **dass** es sich bei dem Eingangssignal um ein mittels eines Lenkwinkelsensors erfasstes Lenkwinkelsignal ($\delta_H$) handelt.

6.  Verfahren nach einem der vorangegangenen Ansprüche,
    **dadurch gekennzeichnet,**
    **dass** das Eingangssignal dem Istsignal ($\dot{\psi}_{mes}$) und das Zwischensignal dem Referenzsignal ($\dot{\psi}_{ref,korr}$) entspricht.

7.  Verfahren nach einem der Ansprüche 2 bis 6,
    **dadurch gekennzeichnet,**
    **dass** in dem Korrektionsschritt Mittelwerte aufeinanderfolgender Extremwerte ($Y_{i-1}$ ; $Y_i$ ; $Y_{i+1}$) des Eingangssignals ($Y$ ; $\delta_H$ ; $\dot{\psi}_{mes}$) gebildet werden und dass das Zwischensignal ($\delta_{H,korr}$ ; $\dot{\psi}_{ref,korr}$) nach Maßgabe der Mittelwerte bestimmt wird.

8.  Verfahren nach Anspruch 7,
    **dadurch gekennzeichnet,**
    **dass** das Zwischensignal ($\delta_{H,korr}$ ; $\dot{\psi}_{ref,korr}$) oder das Referenzsignal ($\dot{\psi}_{ref,korr}$) in einem Zeitpunkt anhand eines Extrapolationsverfahrens aus vor dem Zeitpunkt gebildeten Mittelwerten bestimmt wird.

9.  Verfahren nach Anspruch 8,
    **dadurch gekennzeichnet,**
    **dass** die Mittelwerte bei dem Extrapolationsverfahren mit einem Gewichtungsfaktor versehen werden, der für weiter zurückliegend gebildete Mittelwerte geringer ist, als für näher zurückliegend bestimmte Mittelwerte.

10. Verfahren nach einem der vorangegangenen Ansprüche,
    **dadurch gekennzeichnet,**
    **dass** das Zwischensignal ($\delta_{H,korr}$ ; $\dot{\psi}_{ref,korr}$) mittels eines modell-basierten Filters aus den Mittelwerten bestimmt wird.

11. Verfahren nach Anspruch 10,
    **dadurch gekennzeichnet,**
    **dass** das Eingangssignal als Steuerungsgröße und das Zwischensignal als Zustandsgröße innerhalb des dem Filter zugrunde liegenden Modells berücksichtigt wird.

12. Verfahren nach Anspruch 10 oder 11,
    **dadurch gekennzeichnet,**
    **dass** es sich bei dem Filter um ein Kalman-Filter handelt.

13. Verfahren nach einem der vorangegangenen Ansprüche,
    **dadurch gekennzeichnet,**
    **dass** es sich bei der Stellgröße um ein Lenkmoment ($\Delta M$) handelt, mit dem eine von dem Fahrer bedienbare Lenkhandhabe beaufschlagt wird, um den Fahrzustand des Fahrzeugs zu beeinflussen.

**14.** Verfahren nach einem der vorangegangenen Ansprüche,
**dadurch gekennzeichnet,**
**dass** es sich bei der Stellgröße um ein Zusatzlenkwinkel handelt, mit dem eine Lenkung steuerbar ist, um den Fahrzustand des Fahrzeugs zu beeinflussen.

**15.** Computerprogrammprodukt,
**dadurch gekennzeichnet,**
**dass** es einen Algorithmus definiert, der ein Verfahren nach einem der vorangegangenen Ansprüche umfasst.

**16.** Fahrdynamikregelsystem zum Stabilisieren eines aus einem Zugfahrzeug und einem Anhänger oder einem Auflieger bestehenden Fahrzeuggespanns, umfassend

- einen Sensor, mit dem ein Eingangssignal ($Y$; $\delta_H$; $\dot{\psi}_{mes}$) erfassbar ist, das Signalschwingungen aufweist, die auf eine Schlingerbewegung des Anhängers oder Aufliegers zurückzuführen sind, wobei die Signalschwingungen einen Basisanteil ($Y_{Basis,}$; $\dot{\psi}_{Basis}$) des Eingangssignals ($Y$; $\delta_H$; $\dot{\psi}_{mes}$) ü-berlagern,
- eine Berechnungseinrichtung (104;501), die zur Berechnung eines Referenzsignals ($\dot{\psi}_{ref,korr}$) aus dem Eingangssignal ($Y$; $\delta_H$; $\dot{\psi}_{mes}$) ausgebildet ist, wobei die Berechnung derart erfolgt, dass das Referenzsignal ($\dot{\psi}_{ref,korr}$) näherungsweise einem aus dem Basisanteil ($Y_{Bsis}$; $\dot{\psi}_{Bsis}$) des Eingangssignals ermittelten Referenzsignal entspricht,
- eine Regeleinrichtung (102), in der eine Stellgröße ($\Delta\delta$) in Abhängigkeit von einer Regelabweichung ($\Delta\dot{\psi}_{Trailer}$) zwischen dem Referenzsignal ($\dot{\psi}_{ref,korr}$) und einem erfassten Istsignal ($\dot{\psi}_{mes}$) ermittelbar ist und
- einen Aktuator, mit dem ein Fahrzustand des Zugfahrzeugs nach Maßgabe der ermittelten Stellgröße ($\Delta\delta$) beeinflussbar ist.

**Claims**

**1.** Method for stabilizing a vehicle combination consisting of a towing vehicle and a trailer or a semitrailer, comprising the following steps:

- detecting an input signal (Y; $\delta_H$; $\dot{\psi}_{mes}$) which has signal oscillations which are to be ascribed to a rolling movement of the trailer or semitrailer, the signal oscillations being superimposed on a basic component ($Y_{Basis}$; $\dot{\psi}_{Basis}$) of the input signal ($Y$; $\delta_H$; $\dot{\psi}_{mes}$),
- calculating a reference signal ($\dot{\psi}_{ref,korr}$) from the input signal (Y; $\delta_H$; $\dot{\psi}_{mes}$), the calculation being undertaken in such a way that the reference signal ($\dot{\psi}_{ref,korr}$) corresponds approximately to a reference signal determined from the basic component ($Y_{Basis}$; $\dot{\psi}_{Basis}$) of the input signal (Y; $\delta_H$; $\dot{\psi}_{mes}$),
- determining a manipulated variable ($\Delta\delta$; $\Delta M$) as a function of a system deviation ($\Delta\dot{\psi}_{Trailer}$) between the reference signal ($\dot{\psi}_{ref,korr}$) and a detected actual signal ($\dot{\psi}_{mes}$), and
- influencing the driving state of the towing vehicle in accordance with the determined manipulated variable ($\Delta\delta$; $\Delta M$).

**2.** Method according to Claim 1, **characterized in that** there is calculated from the input signal (Y; $\delta_H$; $\dot{\psi}_{mes}$) in a correction step an intermediate signal ($\delta_{H,korr}$; $\dot{\psi}_{ref,korr}$) which corresponds approximately to the basic component ($Y_{basis}$; $\dot{\psi}_{Basis}$) of the input signal ($Y$; $\delta_H$; $\dot{\psi}_{mes}$), and **in that** the intermediate signal is used for determining the reference signal ($\dot{\psi}_{ref,korr}$).

**3.** Method according to Claim 1 or 2, **characterized in that** the reference signal is a reference yaw rate signal ($\dot{\psi}_{ref,korr}$), and the actual signal is an actual yaw rate signal ($\dot{\psi}_{mes}$) detected by means of a yaw rate sensor.

**4.** Method according to one of the preceding claims, **characterized in that** the reference signal ($\dot{\psi}_{ref,korr}$) is calculated with the aid of a vehicle model as a function of the intermediate signal ($\delta_{H,korr}$).

**5.** Method according to one of the preceding claims, **characterized in that** the input signal is a steering angle signal ($\delta_H$) detected by means of a steering angle sensor.

**6.** Method according to one of the preceding claims, **characterized in that** the input signal corresponds to the actual signal ($\dot{\psi}_{mes}$), and the intermediate signal corresponds to the reference signal ($\dot{\psi}_{ref,korr}$).

7. Method according to one of Claims 2 to 6, **characterized in that** in the correction step mean values of consecutive extreme values ($Y_{i-1}$; $Y_i$; $Y_{i+1}$) of the input signal ($Y$; $\delta_H$; $\dot{\psi}_{mes}$) are formed, and **in that** the intermediate signal ($\delta_{H,korr}$; $\dot{\psi}_{ref,korr}$) is determined in accordance with the mean values.

8. Method according to Claim 7, **characterized in that** the intermediate signal ($\delta_{H,korr}$; $\dot{\psi}_{ref,korr}$) or the reference signal ($\dot{\psi}_{ref,korr}$) is determined at an instant with the aid of an extrapolation method from mean values formed before the instant.

9. Method according to Claim 8, **characterized in that** the mean values in the case of the extrapolation method are provided with a weighting factor which is smaller for mean values formed further back than for mean values determined closer back.

10. Method according to one of the preceding claims, **characterized in that** the intermediate signal ($\delta_{H,korr}$; $\dot{\psi}_{ref,korr}$) is determined from the mean values by means of a model-based filter.

11. Method according to Claim 10, **characterized in that** the input signal is regarded as control variable, and the intermediate signal is regarded as state variable within the model underlying the filter.

12. Method according to Claim 10 or 11, **characterized in that** the filter is a Kalman filter.

13. Method according to one of the preceding claims, **characterized in that** the manipulated variable is a steering torque ($\Delta M$) with the aid of which a steering handle operable by the driver is applied in order to influence the driving state of the vehicle.

14. Method according to one of the preceding claims, **characterized in that** the manipulated variable is an additional steering angle with the aid of which it is possible to control an instance of steering in order to influence the driving state of the vehicle.

15. Computer program product **characterized in that** it defines an algorithm which comprises a method according to one of the preceding claims.

16. Vehicle dynamics control system for stabilizing a vehicle combination consisting of a towing vehicle and a trailer or a semitrailer, comprising

- a sensor with the aid of which it is possible to detect an input signal *(Y; $\delta_H$; $\dot{\psi}_{mes}$)* which has signal oscillations which are to be ascribed to a rolling movement of the trailer or semitrailer, the signal oscillations being superimposed on a basic component ($Y_{Basis}$; $\dot{\psi}_{Basis}$) of the input signal (*Y; $\delta_H$; $\dot{\psi}_{mes}$*),
- a calculating device (104; 501) which is designed for calculating a reference signal ($\dot{\psi}_{ref,korr}$) from the input signal (Y; $\delta_H$; $\dot{\psi}_{mes}$), the calculation being performed in such a way that the reference signal ($\dot{\psi}_{ref,korr}$) corresponds approximately to a reference signal determined from the basic component ($Y_{Basis}$; $\dot{\psi}_{Basis}$) of the input signal,
- a control device (102) in which a manipulated variable ($\Delta\delta$) can be determined as a function of a system deviation ($\Delta\dot{\psi}_{Trailer}$) between the reference signal ($\dot{\psi}_{ref,korr}$) and a detected actual signal ($\dot{}_{mes}$) and
- an actuator with the aid of which a driving state of the towing vehicle can be influenced in accordance with the determined manipulated variable ($\Delta\delta$).

## Revendications

1. Procédé de stabilisation d'un ensemble articulé de roulage constitué d'un véhicule tracteur et d'une remorque ou d'une semi-remorque, le procédé présentant les étapes suivantes :

saisie d'un signal d'entrée (Y; $\delta_H$, $\psi_{mes}$) qui présente des oscillations qui découlent d'un déplacement en méandres de la remorque ou de la semi-remorque, les oscillations du signal étant superposées à une partie de base ($Y_{Basis}$; $\psi_{Basis}$) du signal d'entrée (Y; $\delta_H$, $\psi_{mes}$),
calcul d'un signal de référence ($\psi_{ref, korr}$) à partir du signal d'entrée (Y; $\delta_H$, $\psi_{mes}$), le calcul étant réalisé de telle sorte que le signal de référence ($\psi_{ref, korr}$) corresponde approximativement à un signal de référence déterminé à partir de la partie de base ($Y_{Basis}$; $\psi_{mes}$) du signal d'entrée (Y; $\delta_H$, $\psi_{mes}$),
détermination d'une grandeur de réglage ($\Delta\delta$, $\Delta M$) en fonction de l'écart de réglage ($\Delta\psi_{Trailer}$) entre le signal

de référence ($\psi_{ref, korr}$) et un signal effectif ($\psi_{mes}$) saisi et
intervention sur l'état de roulage du véhicule tracteur en fonction de la grandeur de réglage ($\Delta\delta$; $\Delta M$) ainsi déterminée.

**2.** Procédé selon la revendication 1, **caractérisé en ce que** dans une étape de correction, un signal intermédiaire ($\delta_{H, korr}$; $\psi_{ref, korr}$) qui correspond approximativement à la partie de base ($Y_{Basis}$; $\psi_{Basis}$) du signal d'entrée (Y; $\delta_H$, $\psi_{mes}$) est calculé à partir du signal d'entrée (Y; $\delta_H$, $\psi_{mes}$), et **en ce que** le signal intermédiaire intervient dans la détermination du signal de référence ($\psi_{ref, korr}$).

**3.** Procédé selon les revendications 1 ou 2, **caractérisé en ce que** le signal de référence est un signal de vitesse de lacet de référence ($\psi_{ref,korr}$) et le signal effectif un signal de vitesse de lacet effective ($\psi_{mes}$) saisi au moyen d'un capteur de vitesse de lacet.

**4.** Procédé selon l'une des revendications précédentes, **caractérisé en ce que** le signal de référence ($\psi_{ref,korr}$) est calculé en fonction du signal intermédiaire ($\delta_{H,korr}$) à l'aide d'un modèle du véhicule.

**5.** Procédé selon l'une des revendications précédentes, **caractérisé en ce que** le signal d'entrée est un signal ($\delta_H$) d'angle de braquage saisi par un capteur d'angle de braquage.

**6.** Procédé selon l'une des revendications précédentes, **caractérisé en ce que** le signal d'entrée correspond au signal effectif ($\psi_{mes}$) et le signal intermédiaire au signal de référence ($\psi_{ref, korr}$).

**7.** Procédé selon l'une des revendications 2 à 6, **caractérisé en ce que** dans l'étape de correction, des valeurs moyennes des valeurs extrêmes successives ($Y_{i-1}$; $Y_i$; $Y_{i+1}$) du signal d'entrée (Y; $\delta_H$, $\psi_{mes}$) sont formées et **en ce que** le signal intermédiaire ($\delta_{H, korr}$, $\psi_{ref, korr}$) est déterminé en fonction des valeurs moyennes.

**8.** Procédé selon la revendication 7, **caractérisé en ce qu'**à un instant donné, le signal intermédiaire ($\delta_{H, korr}$, $\psi_{ref, korr}$) ou le signal de référence ($\psi_{ret, korr}$) sont déterminés à l'aide d'une opération d'extrapolation à partir des valeurs moyennes formées avant cet instant.

**9.** Procédé selon la revendication 8, **caractérisé en ce que** dans l'opération d'extrapolation, les valeurs moyennes sont dotées d'un facteur de pondération plus petit pour les valeurs moyennes formées davantage dans le passé que pour des valeurs moyennes déterminées dans un passé proche.

**10.** Procédé selon l'une des revendications précédentes, **caractérisé en ce que** le signal intermédiaire ($\delta_{H,korr}$, $\psi_{ref,korr}$) est déterminé à partir de valeurs moyennes au moyen d'un filtre basé sur modèle.

**11.** Procédé selon la revendication 10, **caractérisé en ce que** le signal d'entrée est pris en compte comme grandeur de commande et le signal intermédiaire comme grandeur d'état dans le modèle sur lequel le filtre est basé.

**12.** Procédé selon les revendications 10 ou 11, **caractérisé en ce que** le filtre est un filtre de Kalman.

**13.** Procédé selon l'une des revendications précédentes, **caractérisé en ce que** la grandeur de réglage est le couple de braquage ($\Delta M$) appliqué sur le volant de direction par le conducteur pour agir sur l'état de roulage du véhicule.

**14.** Procédé selon l'une des revendications précédentes, **caractérisé en ce que** la grandeur de réglage est un angle supplémentaire de braquage qui commande la direction pour agir sur l'état de roulage du véhicule.

**15.** Produit de programme informatique **caractérisé en ce qu'**il définit un algorithme qui comporte un procédé selon l'une des revendications précédentes.

**16.** Système de régulation de la dynamique de roulage qui stabilise un ensemble articulé de roulage constitué d'un véhicule tracteur et d'une remorque ou d'une semi-remorque, et qui comprend :

un capteur qui permet de saisir un signal d'entrée (Y; $\delta_H$, $\psi_{mes}$) qui présente des oscillations qui découlent d'un déplacement en méandres de la remorque ou de la semi-remorque, les oscillations du signal étant superposées à une partie de base ($Y_{Basis}$; $\psi_{Basis}$) du signal d'entrée (Y; $\delta_H$, $\psi_{mes}$),
un dispositif de calcul (104; 501) configuré pour calculer un signal de référence ($\psi_{ref, korr}$) à partir du signal

d'entrée (Y; $\delta_H$, $\psi_{mes}$), le calcul étant réalisé de telle sorte que le signal de référence ($\psi_{ref, korr}$) corresponde approximativement à un signal de référence déterminé à partir de la partie de base ($Y_{Basis}$; $\psi_{mes}$) du signal d'entrée,

un dispositif de régulation (102) dans lequel une grandeur de réglage ($\Delta\delta$) peut être déterminée en fonction d'une grandeur de réglage en fonction de l'écart de réglage ($\Delta\psi_{Trailer}$) entre le signal de référence ($\psi_{ref, korr}$) et un signal effectif ($\psi_{mes}$) saisi et

un actionneur qui permet d'intervenir sur l'état de roulage du véhicule tracteur en fonction de la grandeur de réglage ($\Delta\delta$) ainsi déterminée.

Fig. 1

Fig. 2

Fig. 4

Fig. 3

EP 1 954 537 B1

Fig. 5

17

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004041612 A
- DE 102004005074 A1